(19) Europäisches Patentamt
European Patent Office
Office européen des brevets

(11) **EP 3 965 311 A1**

(12) **EUROPEAN PATENT APPLICATION**
published in accordance with Art. 153(4) EPC

(43) Date of publication:
**09.03.2022 Bulletin 2022/10**

(21) Application number: **20822865.0**

(22) Date of filing: **02.06.2020**

(51) International Patent Classification (IPC):
*H04B 7/06* (2006.01)    *H04B 7/08* (2006.01)
*H04W 16/28* (2009.01)    *H04W 72/04* (2009.01)

(52) Cooperative Patent Classification (CPC):
**H04B 7/06; H04B 7/08; H04W 16/28; H04W 72/00; H04W 72/04**

(86) International application number:
**PCT/CN2020/093856**

(87) International publication number:
**WO 2020/248867 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2019  CN 201910504826**

(71) Applicant: **Huawei Technologies Co., Ltd.
Longgang
Shenzhen, Guangdong 518129 (CN)**

(72) Inventors:
• **HAN, Xiao
Shenzhen, Guangdong 518129 (CN)**
• **LI, Weizhi
Chengdu, Sichuan 611756 (CN)**
• **GUO, Ziyang
Shenzhen, Guangdong 518129 (CN)**
• **LONG, Yan
Chengdu, Sichuan 611756 (CN)**
• **YAN, Li
Chengdu, Sichuan 611756 (CN)**
• **MA, Mengyao
Shenzhen, Guangdong 518129 (CN)**
• **XIN, Yan
Shenzhen, Guangdong 518129 (CN)**

(74) Representative: **Maiwald Patent- und
Rechtsanwaltsgesellschaft mbH
Elisenhof
Elisenstraße 3
80335 München (DE)**

(54) **BEAM TRAINING METHOD AND APPARATUS**

(57)    This application provides a beam training method and apparatus that can reduce a beam training delay and improve communication service quality. The method includes: A member access point (M-AP) generates a plurality of beacon frames, where a transmitter address of each beacon frame in the plurality of beacon frames is a media access control (MAC) address of a control AP, an antenna port identifier of each beacon frame in the plurality of beacon frames is an antenna port identifier uniformly allocated by the control AP, an association beamforming training (A-BFT) start time point in each beacon frame in the plurality of beacon frames is the same as an A-BFT start time point in a beacon frame sent by another M-AP, each beacon frame in the plurality of beacon frames further includes a number of beacon frames sent by the M-AP, the control AP is an AP other than the M-AP in a plurality of APs, and the control AP can communicate with the plurality of APs; and the M-AP sends the plurality of beacon frames.

300

Control AP    M-AP

S320: Generate a first frame

S330: First frame →

S310: Generate a plurality of beacon frames

S340: Send the plurality of beacon frames

FIG. 3

**Description**

This application claims priority to Chinese Patent Application No. 201910504826.4, filed with the China National Intellectual Property Administration on June 12, 2019 and entitled "BEAM TRAINING METHOD AND APPARATUS", which is incorporated herein by reference in its entirety.

**TECHNICAL FIELD**

Embodiments of this application relate to the field of communication technologies, and in particular, to a beam training method and apparatus.

**BACKGROUND**

To meet access training requirements of more users, a station (station, STA) type based on an enhanced directional multi-gigabit (enhanced directional multi-gigabit, EDMG) is newly added to 802.11ay. In a basic service set control point/access point cluster (BSS PCP/AP cluster) BPAC scenario, STAs and access points (access points, APs) are relatively dense, and beam training between a newly added STA and a plurality of APs and beam training between a legacy STA and the plurality of APs need to be performed separately. The training takes a long time, and therefore affects communication service quality.

Therefore, how to reduce beam training time and improve communication service quality becomes an urgent problem to be resolved.

**SUMMARY**

This application provides a beam training method and apparatus that can reduce a beam training delay and improve communication service quality.

According to a first aspect, a beam training method is provided. The method is applied to a communication system including a plurality of STAs and a plurality of access points (APs). The method includes: A member access point (M-AP) generates a plurality of beacon frames, where a transmitter address of each beacon frame in the plurality of beacon frames is a media access control (MAC) address of a control AP, an antenna port identifier of each beacon frame in the plurality of beacon frames is an antenna port identifier uniformly allocated by the control AP, an association beamforming training (A-BFT) start time point in each beacon frame in the plurality of beacon frames is the same as an A-BFT start time point in a beacon frame sent by another M-AP, each beacon frame in the plurality of beacon frames further includes a number of beacon frames sent by the M-AP, the control AP is an AP other than the M-AP in a plurality of APs, and the control AP can communicate with the plurality of APs; and the M-AP sends the plurality of beacon frames.

In the foregoing technical solution, to implement beam training performed by a plurality of STAs and beam training performed by a plurality of APs in a same time period, a plurality of M-APs may be considered as antennas of a control AP. During beam training, the plurality of M-APs generate a plurality of beacon frames in a BTI phase. A transmitter address of each beacon frame in the plurality of beacon frames is a Media Access Control (MAC) address of the control AP. An antenna port identifier of each beacon frame in the plurality of beacon frames is an antenna port identifier uniformly allocated by the control AP. An association beamforming training (A-BFT) start time point in each beacon frame in the plurality of beacon frames is the same as an A-BFT start time point in a beacon frame sent by another M-AP. Each beacon frame in the plurality of beacon frames further includes a number of beacon frames sent by the M-AP. Through improvement on the plurality of beacon frames, the plurality of STAs and the plurality of APs perform beam training in a same time period. Therefore, a delay occurred during beam training performed by the plurality of STAs and the plurality of APs is reduced, and communication service quality is improved.

With reference to the first aspect, in some implementations of the first aspect, before the M-AP generates the plurality of beacon frames, the method further includes: The M-AP receives a first frame sent by the control AP, where the first frame is used to configure the beacon frames generated by the M-AP.

With reference to the first aspect, in some implementations of the first aspect, the first frame includes at least one of the following information: the association beamforming training (A-BFT) start time point of the M-AP; a beacon transmission interval (BTI) start time point of the M-AP; an antenna mapping relationship between the MAP and the control AP; and the number of beacon frames sent by the M-AP.

In the foregoing technical solution, the control AP sends the first frame to each M-AP, and each beacon frame in the plurality of beacon frames sent by the M-AP is configured by using the first frame, so that the plurality of STAs and the plurality of APs can perform beam training in a same time period. This reduces beam training time and improves communication service quality.

With reference to the first aspect, in some implementations of the first aspect, the antenna mapping relationship is determined by the control AP based on a number of M-APs and a number of beacon intervals (BIs).

With reference to the first aspect, in some implementations of the first aspect, the antenna mapping relationship is determined by the control AP according to a formula:

$$uniform\ Antenna\ ID = uniform\ antenna\ number - (n-1) \times Maximum\ T_x\_Antenna\ ,$$

where *uniform Antenna ID* is an antenna number obtained after the M-AP and the control AP perform mapping, *uniform antenna number* is an antenna number allocated by the control AP, *n* represents an $n^{th}$ beacon interval (BI), and *Maximum $T_x$_Antenna* represents a maximum number of antennas used in each BI.

A DMG antenna ID in a sector sweep (sector sweep, SSW) in a DMG beacon in an 802.11ad standard occupies only 2 bits (bits), can indicate only four antennas, and is insufficient to indicate antennas of a plurality of C-APs. The antenna mapping relationship between the control AP and the M-AP may be determined according to the foregoing formula, so that each of the plurality of APs may be considered as one antenna of the control AP. Therefore, that the plurality of STAs and the plurality of APs perform beam training may be considered as that the plurality of STAs and one AP perform beam training.

With reference to the first aspect, in some implementations of the first aspect, the number of beacon frames sent by the M-AP is determined by the control AP based on the antenna mapping relationship.

With reference to the first aspect, in some implementations of the first aspect, the number of beacon frames sent by the M-AP is determined by the control AP according to a formula:

$$CDOWN = \left\{ \left[ \left( Total\ Number\ of\ CDOWN \right) - \sum_0^{n-1} CDOWN \right] - \sum_{i=0}^{Uniform\ Antenna\ ID} \left[ \left( CDOWN\ Index \right)_{Uniform\ Antenna\ ID} \right] \times 32 \right\} - N$$

where *Total Number of CDOWN* is a total number of beacon frames determined by the control AP, *uniform Antenna ID* is the antenna number obtained after the M-AP and the control AP perform mapping, *N* represents an $N^{th}$ beacon frame, and *n* represents an $n^{th}$ beacon interval (BI).

Currently, when a CDOWN field in the SSW in the DMG beacon is configured, only a number of beacon frames sent by a current M-AP is considered. In this embodiment of this application, because the control AP uniformly schedules the plurality of M-APs, a number of beacon frames sent by each M-AP in the plurality of M-APs needs to be considered. According to the foregoing formula, the number of beacon frames sent by each M-AP may be explicitly indicated by using the CDOWN field, so that the control AP can orderly and uniformly schedule the plurality of M-APs.

With reference to the first aspect, in some implementations of the first aspect, the method further includes: The M-AP determines a first time point based on the A-BFT start time point and a start time point at which the M-AP sends the beacon frames, where the first time point is a start time point at which the M-AP and the plurality of STAs perform beam training in a same time period.

With reference to the first aspect, in some implementations of the first aspect, the method further includes: That the M-AP determines a first time point based on the A-BFT start time point and a start time point at which the M-AP sends the beacon frames includes:

The M-AP determines the first time point according to a formula:

$$Duration_X^b = \left( A - BFT\ Start\ Time \right) - \left( BTI\ Start\ Time \right)_X - \sum_0^{b-s} \left( TXTIME_{DMG\ Beacon} + SBIFS \right) - \sum_0^s \left( TXTIME_{DMG\ Beacon} + LBIFS \right) ,$$

where *TXTIME* is a time period required for the M-AP to send the beacon frames, *X* is an antenna number of the M-AP in a current BI, *n* represents an $n^{th}$ beacon interval (BI), *SBIFS* is a short beamforming interframe space, *LBIFS* is a long beamforming interframe space, *b* is a $b^{th}$ beacon frame, and *S* is a number of antenna switching times in a transmission process of the M-AP.

After receiving the first frame sent by the control AP, each M-AP may obtain the A-BFT start time point and the start time point at which the M-AP sends the beacon frames, namely, the BTI start time point, where the A-BFT start time point and the BTI start time point are included in the first frame. The M-AP determines the first time point based on the A-BFT start time point and the BTI start time point, so that the plurality of STAs and the plurality of APs perform beam training in a same time period.

With reference to the first aspect, in some implementations of the first aspect, the first frame further includes a uniform antenna number allocation element, and the method further includes: The M-AP receives the antenna mapping relationship and the number of beacon frames, where the antenna mapping relationship and the number are sent by the control AP in a unicast or broadcast manner by using the uniform antenna number allocation element.

With reference to the first aspect, in some implementations of the first aspect, before the M-AP receives the antenna mapping relationship and the number of beacon frames that are sent by the control AP in a unicast or broadcast manner by using the uniform antenna number allocation element, the method further includes: The M-AP negotiates with the control AP by using a uniform antenna number negotiation element to perform uniform antenna numbering.

In the foregoing technical solution, each beacon frame in the plurality of beacon frames sent by the plurality of M-APs is configured, so that the plurality of STAs and the plurality of APs can perform beam training in a same time period. This reduces a beam training delay and improves communication service quality.

According to a second aspect, a beam training method is provided. The method includes: A control AP generates a first frame, where the first frame is used to configure a plurality of beacon frames sent by a plurality of member access points (M-APs), the first frame includes a start time point at which each M-AP in the plurality of M-APs separately sends beacon frames, a number of beacon frames sent by each M-AP in the plurality of M-APs, an antenna mapping relationship between each M-AP in the plurality of M-APs and the control AP, and an association beamforming training (A-BFT) start time point, the control AP is an AP other than the M-APs in a plurality of APs, and the control AP can communicate with the plurality of M-APs; and the control AP sends the first frame to the MAP.

In some possible implementations, in a BPAC setup phase, the control AP sends the first frame (for example, a beacon setup frame) to each M-AP in the plurality of APs, notifies each M-AP in the plurality of APs of a start time point of beam training and an allocation status of antenna numbers.

With reference to the second aspect, in some implementations of the second aspect, that a control AP generates a first frame includes: The control AP determines the antenna mapping relationship based on a number of M-APs and a number of beacon intervals (BIs).

With reference to the second aspect, in some implementations of the second aspect, the determining, by the control AP, that the control AP determines the antenna mapping relationship based on a number of M-APs and a number of beacon intervals (BIs) includes: The control AP calculates the antenna mapping relationship according to a formula:

$$uniform\ Antenna\ ID = uniform\ antenna\ number - (n-1) \times Maximum\ T_x\_Antenna$$,

where *uniform Antenna ID* is an antenna number obtained after the M-AP and the control AP perform mapping, *uniform antenna number* is an antenna number allocated by the control AP, $n$ represents an $n_{th}$ beacon interval (BI), and *Maximum $T_x$_Antenna* represents a maximum number of antennas used in each BI.

With reference to the second aspect, in some implementations of the second aspect, that a control AP generates a first frame includes: The control AP determines, based on the antenna mapping relationship, the number of beacon frames sent by the M-AP.

With reference to the second aspect, in some implementations of the second aspect, that the control AP determines, based on the antenna mapping relationship, the number of beacon frames sent by the M-AP includes: the control AP determines the number of beacon frames sent by the M-AP according to a formula:

$$CDOWN = \left\{ \left[ \left( Total\ Number\ of\ CDOWN \right) - \sum_{0}^{n-1} CDOWN \right] - \sum_{i=0}^{Uniform\ Antenna\ ID} \left[ \left( CDOWN\ Index \right)_{Uniform\ Antenna\ ID} \right] \times 32 \right\} - N$$,

where *Total Number of CDOWN* is a total number of beacon frames determined by the control AP, *uniform Antenna ID* is the antenna number obtained after the M-AP and the control AP perform mapping, $N$ represents an $N^{th}$ beacon frame, and $n$ represents an $n^{th}$ beacon interval (BI).

With reference to the second aspect, in some implementations of the second aspect, a first time point of the M-AP is determined by the M-AP based on the start time point at which the M-AP sends beacon frames and the A-BFT start time point, where the first time point is a start time point at which the M-AP and the plurality of STAs simultaneously perform beam training.

With reference to the second aspect, in some implementations of the second aspect, the first time point is determined by the M-AP according to a formula:

$$Duration_X^b = \left( A-BFT\ StartTime \right) - \left( BTI\ StartTime \right)_X - \sum_{0}^{b-s} \left( TXTIME_{DMG\ Beacon} + SBIFS \right) - \sum_{0}^{s} \left( TXTIME_{DMG\ Beacon} + LBIFS \right)$$,

where *TXTIME* is a time period required for the M-AP to send the beacon frames, $X$ is an antenna number of the M-AP in a current BI, $n$ represents an $n^{th}$ beacon interval (BI), *SBIFS* is a short beamforming interframe space, *LBIFS* is a long beamforming interframe space, $b$ is a $b^{th}$ beacon frame, and $S$ is a number of antenna switching times in a transmission process of the M-AP.

With reference to the second aspect, in some implementations of the second aspect, the first frame further includes a uniform antenna number allocation element, and the method further includes: The control AP sends the antenna mapping relationship and the number of beacon frames to the M-AP in a unicast or broadcast manner by using the uniform antenna number allocation element.

With reference to the second aspect, in some implementations of the second aspect, before the control AP sends the antenna mapping relationship and the number of beacon frames to the M-AP in a unicast or broadcast manner by using the uniform antenna number allocation element, the method further includes: The control AP negotiates with the M-AP by using a uniform antenna number negotiation element to perform uniform antenna numbering.

According to a third aspect, a beam training apparatus is provided, and is configured to perform the method in any one of the first aspect or the possible implementations of the first aspect. Specifically, the apparatus includes a unit configured to perform the method in any one of the first aspect or the possible implementations of the first aspect.

According to a fourth aspect, a beam training apparatus is provided, and is configured to perform the method in any one of the second aspect or the possible implementations of the second aspect. Specifically, the apparatus includes a unit configured to perform the method in any one of the second aspect or the possible implementations of the second aspect.

According to a fifth aspect, a beam training apparatus is provided. The apparatus includes:

> a transceiver, configured to perform sending and receiving steps; and
> a processor, configured to read and run instructions, so that the apparatus implements the method in any one of the first aspect or the possible implementations of the first aspect.

Optionally, the apparatus further includes a memory, the memory is coupled to the processor, and the memory is configured to store the instructions.

Optionally, there are one or more processors, and there are one or more memories.

Optionally, the memory may be integrated with the processor, or the memory and the processor are separately disposed.

According to a sixth aspect, a beam training apparatus is provided. The apparatus includes:

> a transceiver, configured to perform sending and receiving steps; and
> a processor, configured to read and run instructions, so that the apparatus implements the method in any one of the second aspect or the possible implementations of the second aspect.

Optionally, the apparatus further includes a memory, the memory is coupled to the processor, and the memory is configured to store the instructions.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a seventh aspect, a beam training system is provided. The system includes an apparatus configured to implement the method in any one of the first aspect or the possible implementations of the first aspect, and an apparatus configured to implement the method in any one of the second aspect or the possible implementations of the second aspect.

According to an eighth aspect, a computer program product is provided. The computer program product includes computer program instructions. When the computer program instructions are run on a computer, the computer is enabled to perform the method in any one of the first aspect or the possible implementations of the first aspect.

According to a ninth aspect, a computer program product is provided, where the computer program product includes computer program instructions. When the computer program instructions are run on a computer, the computer is enabled to perform the method in any one of the second aspect or the possible implementations of the second aspect.

According to a tenth aspect, a computer-readable medium is provided, and is configured to store a computer program, where the computer program includes instructions used to perform the method in any one of the first aspect or the possible implementations of the first aspect.

According to an eleventh aspect, a computer-readable medium is provided, and is configured to store a computer program, where the computer program includes instructions used to perform the method in any one of the second aspect or the possible implementations of the second aspect.

According to a twelfth aspect, a chip is provided, including a processor. The chip is configured to read and run instructions, so that a communication device on which the chip is installed performs the method in any one of the first aspect or the possible implementations of the first aspect.

According to a thirteenth aspect, a chip is provided, including a processor. The chip is configured to read and run instructions, so that a communication device on which the chip is installed performs the method in any one of the second aspect or the possible implementations of the second aspect.

According to a fourteenth aspect, a beam training apparatus is provided. The apparatus includes a processing circuit and an output interface that is internally connected to and communicated with the processing circuit. The processing circuit is configured to read and run instructions to generate the plurality of beacon frames according to the method in any one of the first aspect or the possible implementations of the first aspect. The output interface is configured to send the plurality of beacon frames.

The beam training apparatus provided in the fourteenth aspect is configured to perform any one of the first aspect or the possible implementations of the first aspect. For specific details, refer to any one of the first aspect or the possible implementations of the first aspect. Details are not described herein again.

According to a fifteenth aspect, a beam training apparatus is provided. The apparatus includes a processing circuit and an output interface that is internally connected to and communicated with the processing circuit. The processing circuit is configured to read and run instructions to generate the first frame according to the method in any one of the second aspect or the possible implementations of the second aspect. The output interface is configured to send the first frame.

The beam training apparatus provided in the fifteenth aspect is configured to perform any one of the second aspect or the possible implementations of the second aspect. For specific details, refer to any one of the second aspect or the possible implementations of the second aspect. Details are not described herein again.

**BRIEF DESCRIPTION OF DRAWINGS**

FIG. 1 is a schematic diagram of a structure of a beacon interval according to an embodiment of this application;

FIG. 2 is a schematic diagram of a communication system according to an embodiment of this application;

FIG. 3 is a schematic flowchart of a beam training method according to an embodiment of this application;

FIG. 4 is a diagram of a structure of a uniform antenna number allocation element according to an embodiment of this application;

FIG. 5 is a diagram of a structure of a uniform antenna number negotiation element according to an embodiment of this application;

FIG. 6 is a sequence diagram of uniform A-BFT according to an embodiment of this application; and

FIG. 7 is a schematic block diagram of a beam training apparatus according to an embodiment of this application.

**DESCRIPTION OF EMBODIMENTS**

The following describes technical solutions of this application with reference to accompanying drawings.

The technical solutions in embodiments of this application may be applied to various communication systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

The technical solutions in the embodiments of this application may be further used in a wireless local area network (wireless local area network, WLAN), and the embodiments of this application is applicable to any protocol in the institute of electrical and electronics engineers (institute of electrical and electronics engineers, IEEE) 802.11 series protocols currently used for the WLAN.

The WLAN may include a plurality of network nodes, for example, one or more access points (access point, AP) and one or more stations (station, STA). One STA can access only one AP (in other words, the STA is associated with the AP), while one AP can be associated with a plurality of STAs. Before performing data transmission, the STA and the AP need to perform beam training to obtain an optimal receive beam and/or an optimal transmit beam between the STA and the AP. It should be understood that, in a beam training process, generally, a party that actively initiates beam training is referred to as an initiating device, and a party that passively performs beam training is referred to as a responding device. The initiating device mentioned in the following in this specification may also be referred to as an initiator (initiator), and the responding device may also be referred to as a responder (responder). Details are not described in the following.

Specifically, the WLAN is used as an example. In the embodiments of this application, the initiating device and the responding device each are a device having a wireless communication function, and may be a user station (station, STA) in the WLAN. The user station may also be referred to as a user unit, an access terminal, a mobile station, a remote station, a remote terminal, a mobile device, a user terminal, a terminal, a wireless communication device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a computing device, or another processing device connected to a wireless modem.

The initiating device and the responding device in the embodiments of this application may alternatively be a personal basic service set control point/access point (personal basic service set control point/access point, PCP/AP) in a WLAN. The PCP/AP may be configured to communicate with an access terminal through the wireless local area network, and transmit data from the access terminal to a network side, or transmit data from the network side to the access terminal.

In addition, each aspect or feature of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

For ease of understanding and description, as an example instead of a limitation, the following describes an execution process and an action of a handover method and apparatus in this application in a WLAN system.

The following first describes related technologies in this application.

1. Beacon interval (beacon interval, BI)

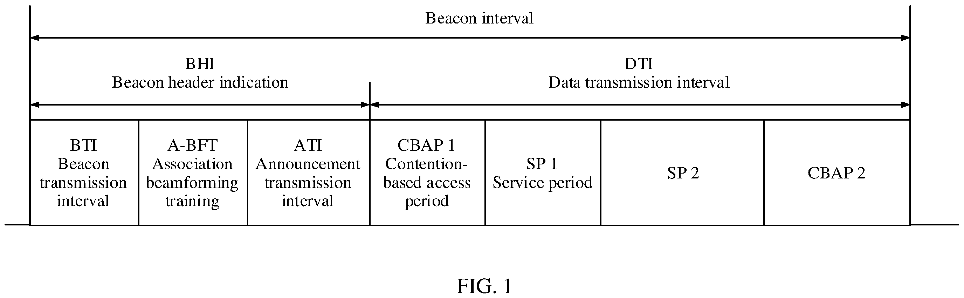

FIG. 1 is a schematic diagram of a structure of a beacon interval (BI). As shown in FIG. 1, the beacon interval is divided into a beacon header indication (beacon header indication, BHI) and a data transmission interval (data transmission interval, DTI). The BHI further includes a beacon transmission interval (beacon transmission interval, BTI), association beamforming training (association beamforming training, A-BFT), and an announcement transmission interval (announcement transmission interval, ATI).

Specifically, a PCP/AP sends a plurality of beacon (beacon) frames in the BTI based on a sector number, where the beacon frames are used for downlink sector sweep. The A-BFT is used by a STA to perform association and uplink sector sweep. The ATI is used by the PCP/AP to poll the STA for buffered data information and allocate resources in the data transmission interval (data transmission interval, DTI) to the STA. The entire DTI is divided into several subintervals, and the subintervals are divided into a contention-based access period (contention-based access period, CBAP) and a service period (service period, SP) based on an access form. In the service period, scheduling transmission is performed, and contention does not need to be performed.

2. Beamforming training (beamforming training, BFT)

Beamforming training is also referred to as beam training, and may specifically include a sector sweep (sector sweep, SSW) phase and a sector sweep feedback (sector sweep feedback, SSW-Feedback) phase.

(1) The sector sweep phase includes an initiator sector sweep (initiator sector sweep, ISS) phase and a responder sector sweep (responder sector sweep, RSS) phase. The ISS phase is used to train a directional transmit beam of the initiator. The initiator sends training data directionally by using a beam of a specific width, and the responder receives the training data quasi-omnidirectionally. The RSS phase is used to train a directional transmit beam of the responder. The responder sends training data by using a beam of a specific width, where the training data includes information about the best sending sector of the initiator in a previous phase. In this case, the initiator receives the training data quasi-unidirectionally. The training data may be an SSW frame.

(2) In the sector sweep feedback phase, feedback information is a list of initiator transmit sectors sorted based on sector quality and includes the best sector of the responder in a previous phase. In this case, the responder is in a quasi-omnidirectional receiving mode.

An optimal receive beam and/or an optimal transmit beam between the initiator and the responder may be obtained through beamforming training.

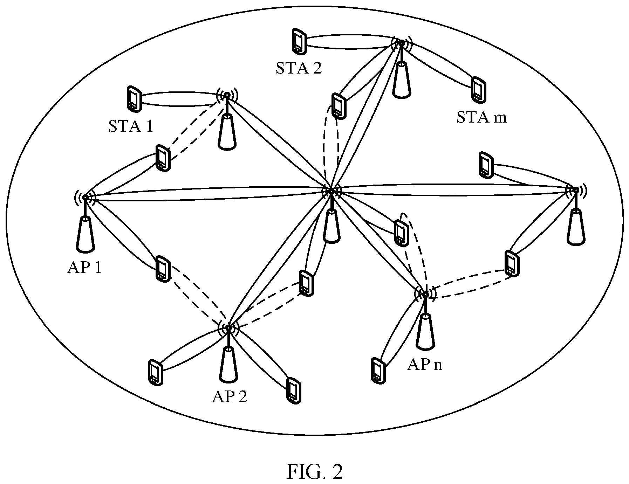

FIG. 2 is a schematic diagram of a communication system according to an embodiment of this application. As shown in FIG. 2, the communication system includes a plurality of APs. For the plurality of APs, one or more STAs further exist within coverage of all or a part of the APs. Specifically, in the communication system shown in FIG. 2, there are a total of n APs and m STAs in the communication system. Both m and n are integers greater than or equal to 1.

It should be understood that the communication system may be directed at a moving scenario, or may be directed at a non-moving scenario. In other words, the STA may be mobile, or may be fixed. Therefore, when a STA can move, a number of STAs within coverage of one AP may change in real time. In other words, there may be a moment at which an AP does not cover any STA. This is not limited in this embodiment of this application.

In the communication system shown in FIG. 2, when a plurality of STAs perform beam training with one AP, to reduce a beam training delay and improve beam training efficiency, in the 802.11ay standard, a number of slots in the A-BFT may be increased from 8 to 40. In addition, in the 802.11ay, an A-BFT multiplier field is added to a beacon (beacon) frame sent by a PCP/AP in each direction during a BTI, so that the original A-BFT in the 802.11ad standard is extended by setting this field. In other words, the STAs are allowed to perform beam training in advance at the end of the BTI phase, so that more STAs can perform access training in a same time period. In this conventional access training manner, beam training can only be performed by a plurality of STAs and one AP in a same time period. For beam training completed by a plurality of STAs and a plurality of APs, a plurality of beacon intervals (BIs) are required, which leads to reduction of beam training efficiency and a large delay, and affects communication service quality.

In view of this, an embodiment of this application provides a beam training method that can reduce beam training time and improve communication service quality.

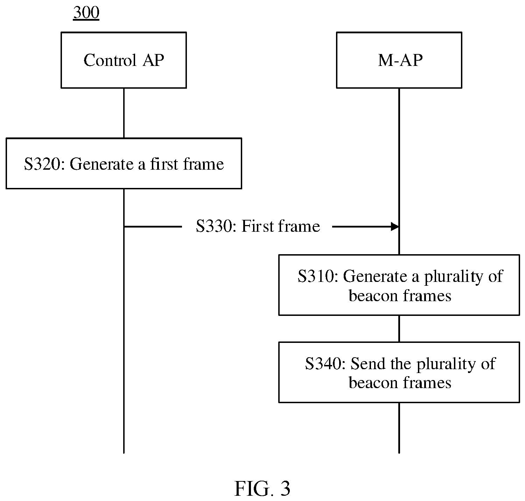

FIG. 3 is a schematic flowchart of a beam training method 300 according to an embodiment of this application. The method 300 may be applied to the communication system 200 shown in FIG. 2. However, this embodiment of this application is not limited thereto.

S310: An M-AP generates a plurality of beacon frames.

To implement beam training performed by a plurality of STAs and a plurality of APs in a same BTI/A-BFT, it may be assumed that all M-APs other than a control AP in the plurality of APs in a same range may be considered as virtual antennas of the control AP. In this case, that the plurality of STAs and the plurality of APs perform beam training may be considered as that the plurality of STAs perform beam training only with the control AP. The plurality of STAs include at least two types of STAs, for example, STAs based on the 802.11ad standard and STAs of a new type in the 802.11ay standard.

In the BTI phase, each M-AP sequentially sends a beacon (beacon) frame to the plurality of STAs by using a directional beam of a specific width in sequence; when the beacon frame is transmitted, transmitter addresses of all the M-APs use media access control (media access control, MAC) address of the control AP, and the plurality of STAs receive training data through quasi-omnidirectional antennas. However, in this embodiment of this application, because all the M-APs are considered as antennas of the control AP, a directional multi-gigabit antenna identifier (directional multi-gigabit antenna identifier, DMG Antenna ID) configured in each beacon frame is an antenna port identifier uniformly allocated by the control AP. In addition, to implement beam training performed by the plurality of M-APs and the plurality of STAs in a same time period, a field that is in each beacon frame in the plurality of beacon frames sent by the M-AP and that indicates an association beamforming training (A-BFT) start time point is the same. The beacon frame sent by each M-AP further includes a number of beacon frames sent by each M-AP.

To be compatible with the STAs in the 802.11ad standard and the STAs of the new type in the 802.11ay standard, a frame structure of a DMG beacon inherits a frame structure of a DMG beacon in the 802.11ad standard. However, a DMG antenna ID in a sector sweep (sector sweep, SSW) in the DMG beacon in the 802.11ad standard occupies only 2 bits (bits), can indicate only four antennas, and cannot indicate antennas of a plurality of C-APs. In addition, currently, when a CDOWN field in the SSW in the DMG beacon is configured, only a number of beacon frames sent by a current M-AP is considered. In this embodiment of this application, because the control AP uniformly schedules the plurality of M-APs, a number of beacon frames sent by each M-AP in the plurality of M-APs needs to be considered. In addition, in this embodiment of this application, each M-AP needs to configure a duration (duration) field in a DMG beacon frame of the M-AP based on known information to ensure that the duration fields point to a same time point, to be specific, a time point at which the A-BFT of the BI in the 802.11ad standard starts.

Therefore, to implement beam training performed by the plurality of STAs and the plurality of APs in a same time period, before step S310, the method 300 further includes S320: The control AP generates a first frame.

Optionally, the first frame includes at least one of the following information: a start time point at which each M-AP sends beacon frames of the M-AP, a number of beacon frames sent by each M-AP, an A-BFT start time point of each M-AP, and an antenna mapping relationship between each M-AP and the control AP.

The A-BFT start time of each M-AP is the same, so that the plurality of STAs and the plurality of APs perform beam training in one same A-BFT.

In some possible implementations, the control AP determines the antenna mapping relationship between each M-AP and the control AP based on the number of M-APs and a number of beacon intervals (BIs).

For example, the control AP calculates the antenna mapping relationship between the M-AP and the control AP according to formula (1):

$$uniform\ Antenna\ ID = uniform\ antenna\ number - (n-1) \times Maximum\ T_x\_Antenna \quad \text{formula (1)}$$

*uniform Antenna ID* is an antenna number obtained after the M-AP and the control AP perform mapping, *uniform antenna number* is an antenna number allocated by the control AP, $n$ represents an $n^{th}$ beacon interval (BI), and *Maximum* $T_x\_Antenna$ represents a maximum number of antennas used in each BI.

For example, it is assumed that there are six M-APs in a current range, antenna numbers *uniform antenna number* allocated by the control AP to the six M-APs are 0, 1, 2, 3, 4, and 5. The DMG antenna ID in the 802.11ad standard occupies only 2 bits. Therefore, four antennas may be indicated. To indicate the M-APs whose antenna numbers are 4 and 5, the M-APs need to be indicated in the second BI. In this case, a value of $n$ is 2. A value of *Maximum* $T_x\_Antenna$ is 4 by default. The values are brought into formula (1). When *uniform antenna number* is 4, *uniform Antenna ID* is 0, which indicates that the M-AP numbered 4 is numbered as antenna 0 in the second BI of the control AP after mapping. Similarly, when *uniform antenna number* is 5, *uniform Antenna ID* is 1, which indicates that the M-AP numbered 5 is numbered as antenna 1 in the second BI of the control AP after mapping.

In some possible implementations, the control AP determines, based on the antenna mapping relationship, the number of beacon frames sent by each M-AP in the plurality of M-APs.

For example, the control AP determines the number of beacon frames sent by each M-AP according to formula (2):

$$CDOWN = \left\{ \left[ \left( Total\ Number\ of\ CDOWN \right) - \sum_0^{n-1} CDOWN \right] - \sum_{i=0}^{Uniform\ Antenna\ ID} \left[ \left( CDOWN\ Index \right)_{Uniform\ Antenna\ ID} \right] \times 32 \right\} - N$$

formula (2)

*Total Number of CDOWN* is a total number of beacon frames determined by the control AP, *uniform Antenna ID* is the antenna number obtained after the current M-AP and the control AP performs mapping, $N$ represents an $N^{th}$ beacon frame, and $n$ represents an $n^{th}$ beacon interval (BI).

Particularly, if a number of beacon frames sent by each M-AP is the same, formula (2) may be simplified to formula (3):

$$CDOWN = \left( Total\ Number\ of\ CDOWN \right) - \left( \sum_0^{n-1} CDOWN \right) - \left( Uniform\ Antenna\ ID \right) \times 32 - N$$

formula (3)

The CDOWN field obtained after calculation may indicate the number of beacon frames sent by each M-AP in the plurality of M-APs. For example, the control AP determines that the number of beacon frames sent by all the M-APs is 12, a number of beacon frames sent by M-AP 1 is six, a number of beacon frames sent by M-AP 2 is four, and a number of beacon frames sent by M-AP 3 is two. In this case, fields indicated by the CDOWN of M-AP 1 are 11, 10, 9, 8, 7, and 6; fields indicated by the CDOWN of M-AP 2 are 5, 4, 3, and 2; and fields indicated by the CDOWN of M-AP 3 are 1 and 0.

It should be noted that the foregoing specific values are merely for ease of description. These are not limited in this embodiment of this application.

In some possible implementations, the method 300 further includes step S330: The control AP sends the first frame to the M-AP.

For example, the first frame is sent to each M-AP in a unicast manner in a period of time before a start of a beacon interval (BI). The first frame further includes a uniform antenna number allocation element (uniform antenna number allocation element), and the control AP sends a respective antenna mapping relationship and the number of beacon frames sent by each M-AP to each M-AP by using the uniform antenna number allocation element.

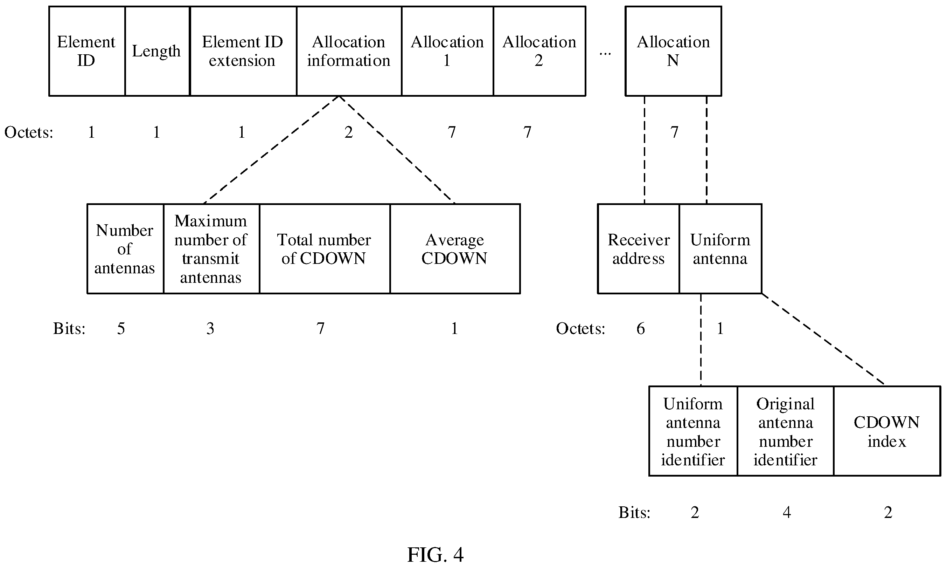

FIG. 4 is a diagram of a structure of a uniform antenna number allocation element. In FIG. 4, the uniform antenna number allocation element may include one or a combination of the following information:

> 1. An element ID (element ID), used to mark and distinguish IDs of elements (elements);
> 2. A length (length), used to indicate a length of the element;
> 3. Element ID extension (element ID extension), used to indicate an extension of the element ID;
> 4. Allocation information (allocation information), used to indicate information about allocation; and
> 5. Allocation N (allocation N), used to indicate allocation information of an $N^{th}$ M-AP.

The allocation information includes one or a combination of the following information:

> 1. A number of antennas (number of antennas) field, used to indicate a number of antennas;
> 2. A maximum number of transmit antennas (maximum Tx antenna) field, used to indicate a maximum number of transmit antennas;
> 3. A total number of CDOWN (total number of CDOWN) field, used to indicate a total number of DMG beacon messages sent; and
> 4. An average CDOWN (average CDOWN) field, used to indicate whether a number of DMG beacon messages sent by each M-AP is the average. For example, that the average CDOWN field is 1 indicates that the number of DMG beacon messages sent by each M-AP is the average; that the average CDOWN field is 0 indicates that the number of DMG beacon messages sent by each M-AP is not the average.

Information about allocation N includes one or a combination of the following information:

> 1. A receiver address (receive address, RA), used to indicate a receiver address, for example, a MAC address; and
> 2. A uniform antenna (uniform antenna), used to indicate an antenna mapping relationship, where the uniform antenna includes a uniform antenna number identifier (uniform antenna ID), an original antenna number identifier (original antenna ID), and a CDOWN index (CDOWN index).

In a BPAC setup phase, the control AP sends the first frame (for example, a beacon setup frame) to each M-AP in the plurality of APs, notifies each M-AP in the plurality of APs of a start time point of beam training and an allocation status of antenna numbers.

It should be understood that, because the uniform antenna number allocation is performed for the BTI in each BI, a value of a uniform antenna number allocated through uniform numbering can only be selected from the set {0, 1, 2, 3}.

In another possible implementation, a beam may be uniquely indicated by reusing an extension DMG antenna identifier (DMG antenna ID) field and using a sector identifier (sector ID) field.

Each M-AP is considered as an antenna of the control AP, and beams of the control AP are formed by beams sent by all the M-APs. When the STAs and the control AP perform beam training, in fact, the STAs and each M-AP perform beam training. To train transmit beams of the M-APs, a transmit beam of each M-AP needs to be clearly indicated. Because the antenna mapping relationship between each M-AP and the control AP has been determined in the first frame, after receiving a corresponding antenna mapping relationship, each M-AP may sequentially fill beam numbers in the sector ID field based on a number of beams of the M-AP. Therefore, one beam of one M-AP is uniquely determined based on the sector ID field and the DMG antenna ID field.

For example, a field filled in the DMG antenna ID field is 01, which indicates antenna 1 of the control AP, namely, M-AP 1; and a field indicating an sector identifier in the sector ID is 1, then beam 1 in M-AP 1 is identified based on the two fields.

In another possible implementation, the control AP may negotiate with each M-AP by using a uniform antenna number negotiation element (uniform antenna number negotiation element), and the control AP coordinates and sends a negotiation result to each M-AP in the unicast or broadcast manner by using the uniform antenna number allocation element.

It should be noted that the foregoing manner in which the control AP sends the antenna mapping relationship and the number of beacon frames sent by each M-AP to each M-AP is merely an example. This is not limited in this embodiment of this application.

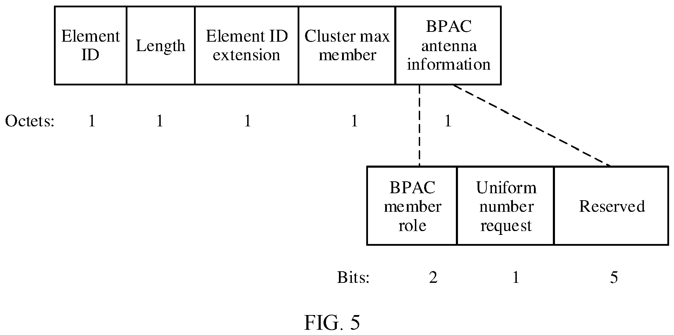

FIG. 5 is a diagram of a structure of a uniform antenna number negotiation element. In FIG. 5, the uniform antenna number negotiation element may include one or a combination of the following information:

1. An element ID (element ID), used to mark and distinguish identifiers of elements (elements);
2. A length (length), used to indicate a length of the element;
3. Element ID extension (element ID extension), used to indicate an extension of the element ID;
4. A cluster max member (cluster max member), used to indicate a number of M-APs in a cluster; and
5. BPAC antenna information (BPAC antenna information), used to indicate antenna information.

The BPAC antenna information includes at least one of the following information: a BPAC member role (BPAC member role), a uniform antenna number request (uniform number request), and reserved bits.

Optionally, the BPAC member role may indicate with 1 bit whether the AP is a control AP or an M-AP. For example, 0 indicates a control AP, and 1 indicates an M-AP; or 0 indicates an M-AP, and 1 indicates a control AP. If the BPAC member role indicates the control AP, that the uniform number request field is set to 1 indicates that an antenna number request is initiated. If the BPAC member role indicates the M-AP, that the uniform number request field is set to 1 indicates that the antenna number request is accepted, and that the uniform number request field is set to 0 indicates that the antenna number request is rejected.

After the control AP determines the mapping relationship between the antennas and the number of beacon frames sent by each M-AP, to enable the plurality of STAs and the plurality of APs to perform beam training in a same time period to reduce a beam training delay, each M-AP in the plurality of APs may configure a duration (duration) field, namely, a first time point, in a DMG beacon frame of the M-AP based on known information, to make all the duration fields point to a same time point. In this embodiment of this application, the same time point refers to the A-BFT start time point.

The first frame sent by the control AP to each M-AP includes a start time point at which each M-AP starts to send respective beacon frames, namely, a BTI start time point. After receiving the first frame sent by the control AP, each M-AP calculates a value of a respective duration field based on the BTI start time point and the A-BFT start time point, so that the duration field of each M-AP points to the same time point, namely, the A-BFT start time point.

In some possible implementations, if the control AP can obtain a number of swept sectors of each M-AP in the plurality of APs, the M-AP calculates and configures a respective duration field according to formula (4):

$$Duration_X^b = \left(A - BFT\ Start\ Time\right) - \left(BTI\ Start\ Time\right)_X - \sum_0^{b-s}\left(TXTIME_{DMG\ Beacon} + SBIFS\right) - \sum_0^s\left(TXTIME_{DMG\ Beacon} + LBIFS\right)$$

formula (4)

TXTIME is a time period required for the M-AP to send the beacon frames, X is an antenna number of the M-AP in a current BI, n represents an $n^{th}$ beacon interval (BI), SBIFS is a short beamforming interframe space, LBIFS is a long beamforming interframe space, b is a $b^{th}$ beacon frame, and S is a number of antenna switching times in a transmission process of the M-AP.

In another possible implementation, it is assumed that the control AP cannot learn a number of sectors swept by an M-AP. Because the 802.11ad standard specifies that a maximum number of sectors of a single antenna is 64, the control AP allocates a time period required for transmitting a maximum of 64 sectors to the M-AP, to ensure to the greatest extent that the time point pointed to by the duration field of the M-AP is consistent with that of other M-APs.

It should be noted that the foregoing manner in which the plurality of beacon frames sent by the M-AP are configured by using the first frame is merely an example. This is not limited in this embodiment of this application.

S340: The M-AP sends the plurality of beacon frames.

After generating a plurality of respective beacon frames based on configuration information, each M-AP sequentially sends the plurality of beacon frames based on the time point at which each M-AP starts to send respective beacon frames.

To enable a plurality of STAs to complete training in a same BTI/A-BFT, rather than separately plan respective BTIs/A-BFTs for the plurality of STAs, in this embodiment of this application, extension may be performed on an original A-BFT phase in the 802.11ad, to obtain a uniform A-BFT (uniform A-BFT) phase after designing. In other words, the uniform A-BFT includes not only the A-BFT phase in the original protocol, but also an end phase divided from an original BTI phase, so that a STA in the 802.11ay standard can preferentially perform access training. This ensures that the plurality of STAs can perform training in a later A-BFT phase, thereby reducing beam training time.

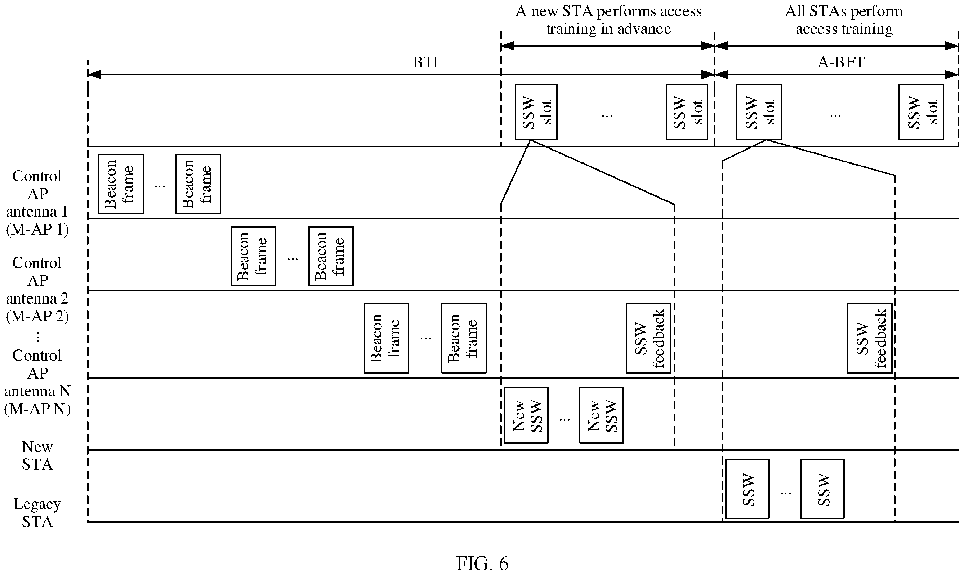

FIG. 6 is a timing diagram of a uniform A-BFT phase. As shown in FIG. 6, after each M-AP completes sending of beacon frames, the M-AP enters the uniform A-BFT phase. A case in which a new STA joins is considered, so that to implement beam training performed by a plurality of STAs and a plurality of APs in a same time period, the uniform A-BFT phase is divided into two parts. In a first part, on the basis of the 802.11ad protocol, a period of time is divided from the end of an original BTI phase for a STA in the 802.11ay standard to perform access training. This ensures that a plurality of STAs can perform beam training simultaneously in a subsequent original A-BFT phase.

A start time point at which the STA of a new type in the 802.11ay standard performs access training in advance in the later part of the BTI phase may be determined based on an A-BFT multiplier field. The A-BFT multiplier field is used to indicate a total length of slots in the A-BFT, a STA in the 802.11ad standard performs beam training in the A-BFT phase, and a number of slots in the phase is 8. Based on the number of slots indicated in the A-BFT multiplier field, by counting backwards from a start time point of the A-BFT phase, in other words, an end time point of the BTI, the start time point at which the STA of the new type in the 802.11ay standard performs beam training in advance is determined.

In FIG. 6, in the A-BFT multiplier field, training slots are allocated for the STA of the new type at the end of the original BTI phase. The STA of the new type sends a new SSW or a new short sector sweep frame (new short SSW) to the M-AP in the slot by using a directional antenna, to train a transmit end antenna of the STA of the new type, and feeds back information about an optimal antenna in a previous phase in training data. A case in which time of an SSW slot (slot) is not sufficient for feedback after interaction between M-APs is considered, so that after receiving the training data, the M-AP first enables the optimal antenna to give a current SSW feedback, and then in a subsequent phase (not the current A-BFT phase), feeds back all training results to the STA of the new type. The second part is a conventional A-BFT phase. In this phase, a plurality of STAs can access the network. A training procedure of the A-BFT phase is the same as that in the existing 802.11ad standard. The STA sends an SSW frame to the M-APs to train transmit antennas of the STA, where the SSW frame includes a result of the BTI phase after training performed by the STA with the M-APs. After the M-APs feed back training information to the control AP, an M-AP with best quality feeds back an SSW feedback frame to the STA based on antenna information fed back in the SSW frame. The SSW feedback frame also includes the result of training performed by the M-APs and the STA.

In the foregoing technical solutions, a plurality of beacon frames sent by each M-AP are configured, so that a plurality of STAs and a plurality of M-APs perform beam training in a same time period. This reduces a training delay and improves communication service quality.

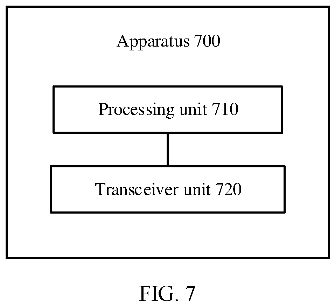

The foregoing describes in detail the beam training method according to the embodiments of this application with reference to FIG. 1 to FIG. 6. The following describes in detail a beam training apparatus according to an embodiment of this application with reference to FIG. 7.

FIG. 7 shows a beam training apparatus 700 according to an embodiment of this application. The apparatus 700 includes a processing unit 710 and a transceiver unit 720. The transceiver unit 720 may include a sending unit and a receiving unit.

In a possible design, the apparatus 700 is configured to implement the procedures and steps corresponding to the member access point (M-AP) in the foregoing method embodiments.

The processing unit 710 is configured to generate a plurality of beacon frames, where a transmitter address of each beacon frame in the plurality of beacon frames is a Media Access Control (MAC) address of a control AP, an antenna port identifier of each beacon frame in the plurality of beacon frames is an antenna port identifier uniformly allocated by the control AP, an association beamforming training (A-BFT) start time point in each beacon frame in the plurality of beacon frames is the same as an A-BFT start time point in a beacon frame sent by another MAP, each beacon frame in the plurality of beacon frames further includes a number of beacon frames sent by the MAP, the control AP is an AP other than the M-AP in the plurality of APs, and the control AP can communicate with the plurality of APs.

The transceiver unit 720 is configured to send the plurality of beacon frames.

Optionally, the transceiver unit 720 is further configured to receive a first frame sent by the control AP, where the first frame is used to configure beacon frames generated by the M-AP.

The first frame includes at least one of the following information: the association beamforming training (A-BFT) start time point of the M-AP; a beacon transmission interval (BTI) start time point of the M-AP; an antenna mapping relationship between the M-AP and the control AP; and the number of beacon frames sent by the M-AP.

Optionally, the antenna mapping relationship is determined by the control AP based on a number of M-APs and a number of beacon intervals (BIs). For example, the antenna mapping relationship is determined by the control AP according to formula (1).

Optionally, the number of beacon frames sent by the M-AP is determined by the control AP based on the antenna mapping relationship. For example, the number of beacon frames sent by the M-AP is determined by the control AP according to formula (2) or formula (3).

Optionally, the processing unit 710 is further configured to: determine a first time point based on the A-BFT start time point and a start time point at which the M-AP sends the beacon frames, where the first time point is a start time point at which the M-AP and a plurality of STAs perform beam training in a same time period. For example, the M-AP determines the first time point according to formula (4).

Optionally, the first frame further includes a uniform antenna number allocation element, and the transceiver unit 720 is further configured to receive the antenna mapping relationship and the number of beacon frames that are sent by the control AP in a unicast or broadcast manner by using the uniform antenna number allocation element.

Optionally, the processing unit 710 is further configured to negotiate with the control AP by using a uniform antenna number negotiation element to perform uniform antenna numbering.

It should be understood that the beam training apparatus 700 provided in this embodiment of this application is the M-AP in the foregoing methods, and the beam training apparatus 700 has any function of the M-AP in the foregoing methods. For specific details, refer to the foregoing methods. Details are not described herein again.

In another possible design, the apparatus 700 is configured to implement procedures and steps corresponding to the control AP in the foregoing method embodiments.

The processing unit 710 is configured to generate a first frame, where the first frame is used to configure a plurality of beacon frames sent by a plurality of member access points (M-APs), the first frame includes a start time point at which each M-AP in the plurality of M-APs separately sends beacon frames, a number of beacon frames sent by each M-AP in the plurality of M-APs, an antenna mapping relationship between each M-AP in the plurality of M-APs and the control AP, and an association beamforming training (A-BFT) start time point, the control AP is an AP other than the M-APs in a plurality of APs, and the control AP can communicate with the plurality of M-APs.

The transceiver unit 720 is configured to send the first frame to the M-AP.

Optionally, the processing unit 710 is specifically configured to determine the antenna mapping relationship based on the number of M-APs and the number of beacon intervals (BIs).

For example, the control AP determines the antenna mapping relationship between the control AP and the M-AP according to formula (1).

Optionally, the processing unit 710 is further specifically configured to determine, based on the antenna mapping relationship, the number of beacon frames sent by the M-AP.

For example, the control AP determines the number of beacon frames sent by the M-AP according to formula (2) or formula (3).

Optionally, a first time point of the M-AP is determined by the M-AP based on the start time point at which the M-AP sends beacon frames and the A-BFT start time point, where the first time point is a start time point at which the M-AP and a plurality of STAs perform beam training in a same time period. For example, the first time is determined by the M-AP according to formula (4).

Optionally, the first frame further includes a uniform antenna number allocation element, and the transceiver unit 720 is further configured to send the antenna mapping relationship and the number of beacon frames to the M-AP in a unicast or broadcast manner by using the uniform antenna number allocation element.

Optionally, the processing unit 710 is further configured to negotiate with the M-AP by using a uniform antenna number negotiation element to perform uniform antenna numbering.

In this embodiment of this application, to implement beam training performed by a plurality of STAs and beam training performed by a plurality of APs in a same time period, a plurality of M-APs may be considered as antennas of a control AP. During beam training, the plurality of M-APs generate a plurality of beacon frames in a BTI phase. A transmitter address of each beacon frame in the plurality of beacon frames is a Media Access Control (MAC) address of the control AP. An antenna port identifier of each beacon frame in the plurality of beacon frames is an antenna port identifier uniformly allocated by the control AP. An association beamforming training (A-BFT) start time point in each beacon frame in the plurality of beacon frames is the same as an A-BFT start time point in a beacon frame sent by another M-AP and a number of beacon frames sent by the M-AP. Through improvement on the plurality of beacon frames, the plurality of STAs and the plurality of APs perform beam training in a same time period. Therefore, a delay occurred during beam training performed by the plurality of STAs and the plurality of APs is reduced, and communication service quality is improved.

It should be understood that the beam training apparatus 700 provided in this embodiment of this application is the control AP in the foregoing methods, and the beam training apparatus 700 has any function of the control AP in the foregoing methods. For specific details, refer to the foregoing methods. Details are not described herein again.

It should be understood that, the apparatus 700 herein is presented in a form of a function unit. The term "unit" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a logic merging circuit, and/or another appropriate component that supports the described function. In an optional example, a person skilled in the art may understand that the apparatus 700 may be specifically the control AP or the M-AP in the foregoing embodiments, and the apparatus 700 may be configured to perform procedures and/or steps corresponding to the control AP or the MAP in the foregoing method embodiments. To avoid repetition, Details are not described herein again.

The apparatus 700 in the foregoing solutions has functions for implementing corresponding steps performed by the control AP or the M-AP in the foregoing methods. The function may be implemented by hardware or may be implemented by using hardware executing corresponding software. The hardware or the software includes one or more modules corresponding to the foregoing functions. For example, a sending unit may be replaced with a transmitter, a receiving unit may be replaced with a receiver, and another unit such as the determining unit may be replaced with a processor, to respectively perform a sending operation, a receiving operation, and a related processing operation in the method embodiments.

In this embodiment of this application, the apparatus in FIG. 7 may be the control AP or the M-AP in the foregoing embodiments, or may be a chip or a chip system, for example, a system on chip (system on chip, SoC). Correspondingly, the receiving unit and the sending unit may be a transceiver circuit of the chip. This is not limited herein.

The foregoing describes the beam training apparatus applied to the M-AP and the beam training apparatus applied to the control AP in the embodiments of this application. The following describes possible product forms of the beam training apparatus applied to the M-AP and the beam training apparatus applied to the control AP. It should be understood that any product having the features of the beam training apparatus applied to the M-AP described in FIG. 7, and any product having the features of the beam training apparatus applied to the control AP described in FIG. 7 fall within the protection scope of this application. It should be further understood that the following description is merely an example, and is not to limit a product form of the beam training apparatus applied to the M-AP and a product form of the beam training apparatus applied to the control AP in this embodiment of this application.

In a possible product form, the beam training apparatus applied to the M-AP and the beam training apparatus applied to the control AP described in this embodiment of this application may be implemented using a general bus architecture.

The beam training apparatus applied to the M-AP includes a processor and a transceiver that is internally connected to and communicated with the processor. The processor is configured to generate a plurality of beacon frames, where a transmitter address of each beacon frame in the plurality of beacon frames is a Media Access Control (MAC) address of a control AP, an antenna port identifier of each beacon frame in the plurality of beacon frames is an antenna port identifier uniformly allocated by the control AP, an association beamforming training (A-BFT) start time point in each beacon frame in the plurality of beacon frames is the same as an A-BFT start time point in a beacon frame sent by another M-AP, and each beacon frame in the plurality of beacon frames further includes a number of beacon frames sent by the M-AP. The transceiver is configured to send the plurality of beacon frames. Optionally, the beam training apparatus applied to the M-AP may further include a memory, and the memory is configured to store instructions executed by the processor.

The beam training apparatus applied to the control AP includes a processor and a transceiver that is internally connected to and communicated with the processor. The processor is configured to generate a first frame, where the first frame is used to configure a plurality of beacon frames sent by a plurality of member access points (M-APs), where the first frame includes a start time point at which each M-AP in the plurality of M-APs separately sends beacon frames, a number of beacon frames sent by each M-AP in the plurality of M-APs, an antenna mapping relationship between each M-AP in the plurality of M-APs and the control AP, and an association beamforming training (A-BFT) start time point. The transceiver is configured to send the first frame to the M-AP. Optionally, the beam training apparatus applied to the control AP may further include a memory, and the memory is configured to store instructions executed by the processor.

In a possible product form, the beam training apparatus applied to the M-AP and the beam training apparatus applied to the control AP described in this embodiment of this application may be implemented using a general-purpose processor.

A general-purpose processor for implementing the apparatus for beam training applied to the M-AP includes a processing circuit and an output interface that is internally connected to and communicated with the processing circuit. The processing circuit is configured to generate a plurality of beacon frames, where a transmitter address of each beacon frame in the plurality of beacon frames is a media access control (MAC) address of a control AP, and an antenna port identifier of each beacon frame in the plurality of beacon frames is an antenna port identifier uniformly allocated by the control AP, an association beamforming training (A-BFT) start time point in each beacon frame in the plurality of beacon frames is the same as an A-BFT start time point in a beacon frame sent by another MAP, and each beacon frame in the plurality of beacon frames further includes a number of beacon frames sent by the M-AP. The output interface sends the plurality of beacon frames. Optionally, the general-purpose processor may further include a storage medium. The storage medium is configured to store instructions executed by the processing circuit.

A general-purpose processor for implementing the beam training apparatus applied to the control AP includes a processing circuit and an output interface that is internally connected to and communicated with the processing circuit. The processing circuit is configured to generate a first frame, where the first frame is used to configure a plurality of beacon frames sent by a plurality of member access points (M-APs), where the first frame includes a start time point at which each M-AP in the plurality of M-APs separately sends beacon frames, a number of beacon frames sent by each M-AP in the plurality of M-APs, an antenna mapping relationship between each M-AP in the plurality of M-APs and the control AP, and an association beamforming training (A-BFT) start time point. The output interface is configured to send the first frame to the M-AP.

As a possible product form, the beam training apparatus applied to the M-AP and the beam training apparatus applied to the control AP in the embodiments of this application may alternatively be implemented by using the following components: one or more FPGAs (field programmable gate arrays), PLDs (programmable logic devices), controllers, state machines, gate logic, discrete hardware components, any other suitable circuits, or any combination of circuits that can perform various functions described in this application.

It should be understood that the beam training apparatus applied to the M-AP and the beam training apparatus applied to the control AP in the foregoing product forms respectively have any functions of the M-AP and the control AP in the foregoing method embodiments. Details are not described herein again.

It should be understood that in the embodiments of this application, the processor in the foregoing apparatus may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, the processor may be any conventional processor, or the like.

In an implementation process, steps in the foregoing methods can be implemented by using a hardware integrated logical circuit in the processor, or by using instructions in a form of software. The steps of the method disclosed with reference to the embodiments of this application may be directly performed by a hardware processor, or may be performed by using a combination of hardware and a software unit that are in a processor. The software unit may be located in a mature storage medium in the art, such as a random access memory, a flash memory, a read-only memory, a programmable read-only memory, an electrically erasable programmable memory, a register, or the like. The storage medium is located in the memory, and the processor executes the instructions in the memory and completes the steps in the foregoing method in combination with hardware of the processor. To avoid repetition, details are not described herein again.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following or a similar expression thereof indicates any combination of the following, and includes any combination of one or more of the following. For example, at least one of a, b, or c may indicate a, b, c, a and b, a and c, b and c, or a, b, and c, where a, b, and c may be singular or plural.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on a particular application and a design constraint condition of the technical solutions. The person of ordinary skill in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and units, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments of this application.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes any medium that can store program instructions, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A beam training method, wherein the method is applied to a communication system comprising a plurality of STAs and a plurality of access points APs, and the method comprises:

   generating, by a member access point M-AP, a plurality of beacon frames, wherein a transmitter address of each beacon frame in the plurality of beacon frames is a Media Access Control MAC address of a control AP, an antenna port identifier of each beacon frame in the plurality of beacon frames is an antenna port identifier uniformly allocated by the control AP, an association beamforming training A-BFT start time point in each beacon frame in the plurality of beacon frames is the same as an A-BFT start time point in a beacon frame sent by another M-AP, each beacon frame in the plurality of beacon frames further comprises a number of beacon frames sent by the M-AP, the control AP is an AP other than the M-AP in the plurality of APs, and the control AP can communicate with the plurality of APs; and
   sending, by the M-AP, the plurality of beacon frames.

2. The method according to claim 1, wherein before the M-AP generates the plurality of beacon frames, the method further comprises:
   receiving, by the M-AP, a first frame sent by the control AP, wherein the first frame is used to configure the plurality of beacon frames generated by the M-AP.

3. The method according to claim 2, wherein the first frame comprises at least one of the following information:

   the association beamforming training A-BFT start time point of the M-AP;
   a beacon transmission interval BTI start time point of the M-AP;
   an antenna mapping relationship between the M-AP and the control AP; and
   the number of beacon frames sent by the M-AP.

4. The method according to claim 3, wherein the antenna mapping relationship is determined by the control AP based on a number of M-APs and a number of beacon intervals BIs.

5. The method according to claim 4, wherein the antenna mapping relationship is determined by the control AP according to a formula:

$$uniform\ Antenna\ ID = uniform\ antenna\ number - (n-1) \times Maximum\ T_x\_Antenna,$$

wherein *uniform Antenna ID* is an antenna number obtained after the M-AP and the control AP perform mapping, *uniform antenna number* is an antenna number allocated by the control AP, *n* represents an $n^{th}$ beacon interval BI, and *Maximum $T_x$_Antenna* represents a maximum number of antennas used in each BI.

6. The method according to any one of claims 3 to 5, wherein the number of beacon frames sent by the M-AP is determined by the control AP based on the antenna mapping relationship.

7. The method according to claim 6, wherein the number of beacon frames sent by the M-AP is determined by the control AP according to a formula:

$$CDOWN = \left\{ \left[ (Total\ Number\ of\ CDOWN) - \sum_{0}^{n-1} CDOWN \right] - \sum_{i=0}^{Uniform\ Antenna\ ID} \left[ (CDOWN\ Index)_{Uniform\ Antenna\ ID} \right] \times 32 \right\} - N,$$

wherein *Total Number of CDOWN* is a total number of beacon frames determined by the control AP, *uniform Antenna ID* is the antenna number obtained after the M-AP and the control AP perform mapping, *N* represents an Nth beacon frame, and *n* represents an *n*[th] beacon interval BI.

8. The method according to any one of claims 1 to 7, wherein the method further comprises:
determining, by the M-AP, a first time point based on the A-BFT start time point and a start time point at which the M-AP sends the beacon frames, wherein the first time point is a start time point at which the M-AP and the plurality of STAs perform beam training in a same time period.

9. The method according to claim 8, wherein the determining, by the M-AP, a first time point based on the A-BFT start time point and a start time point at which the M-AP sends the beacon frames comprises:
determining, by the M-AP, the first time according to a formula:

$$Duration_X^b = \left(A - BFT\ Start\ Time\right) - \left(BTI\ Start\ Time\right)_X - \sum_0^{b-s}\left(TXTIME_{DMG\ Beacon} + SBIFS\right) - \sum_0^{s}\left(TXTIME_{DMG\ Beacon} + LBIFS\right),$$

wherein *TXTIME* is a time period required for the M-AP to send the beacon frames, *X* is an antenna number of the M-AP in a current BI, *n* represents an *n*[th] beacon interval BI, *SBIFS* is a short beamforming interframe space, *LBIFS* is a long beamforming interframe space, *b* is a *b*[th] beacon frame, and *S* is a number of antenna switching times in a transmission process of the M-AP.

10. The method according to any one of claims 2 to 9, wherein the first frame further comprises a uniform antenna number allocation element, and the method further comprises:
receiving, by the M-AP, the antenna mapping relationship and the number of beacon frames that are sent by the control AP in a unicast or broadcast manner by using the uniform antenna number allocation element.

11. The method according to claim 10, wherein before the receiving, by the M-AP, the antenna mapping relationship and the number of beacon frames that are sent by the control AP in a unicast or broadcast manner by using the uniform antenna number allocation element, the method further comprises:
negotiating, by the M-AP, with the control AP by using a uniform antenna number negotiation element to perform uniform antenna numbering.

12. A beam training method, comprising:

generating, by a control AP, a first frame, wherein the first frame is used to configure a plurality of beacon frames sent by a plurality of member access points M-APs, the first frame comprises a start time point at which each M-AP in the plurality of M-APs separately sends beacon frames, a number of beacon frames sent by each M-AP in the plurality of M-APs, an antenna mapping relationship between each M-AP in the plurality of M-APs and the control AP, and an association beamforming training A-BFT start time point, the control AP is an AP other than the M-APs in a plurality of APs, and the control AP can communicate with the plurality of M-APs; and
sending, by the control AP, the first frame to the M-AP.

13. The method according to claim 12, wherein the generating, by a control AP, a first frame comprises:
determining, by the control AP, the antenna mapping relationship based on a number of M-APs and a number of beacon intervals BIs.

14. The method according to claim 13, wherein the determining, by the control AP, the antenna mapping relationship based on a number of M-APs and a number of beacon intervals BIs comprises:
calculating, by the control AP, the antenna mapping relationship according to a formula:

$$uniform\ Antenna\ ID = uniform\ antenna\ number - (n-1) \times Maximum\ T_x\_Antenna,$$

wherein *uniform Antenna ID* is an antenna number obtained after the M-AP and the control AP perform mapping, *uniform antenna number* is an antenna number allocated by the control AP, *n* represents an *n*[th] beacon interval BI, and *Maximum $T_x$_Antenna* represents a maximum number of antennas used in each BI.

15. The method according to any one of claims 12 to 14, wherein the generating, by a control AP, a first frame comprises:

determining, by the control AP based on the antenna mapping relationship, the number of beacon frames sent by the M-AP.

16. The method according to claim 15, wherein the determining, by the control AP based on the antenna mapping relationship, the number of beacon frames sent by the M-AP comprises:
determining, by the control AP, the number of beacon frames sent by the M-AP according to a formula:

$$CDOWN = \left\{ \left[ \left( Total\ Number\ of\ CDOWN \right) - \sum_{0}^{n-1} CDOWN \right] - \sum_{i=0}^{Uniform\ Antenna\ ID} \left[ \left( CDOWN\ Index \right)_{Uniform\ Antenna\ ID} \right] \times 32 \right\} - N \ ,$$

wherein *Total Number of CDOWN* is a total number of beacon frames determined by the control AP, *uniform Antenna ID* is the antenna number obtained after the M-AP and the control AP perform mapping, *N* represents an $N^{th}$ beacon frame, and *n* represents an $n^{th}$ beacon interval BI.

17. The method according to any one of claims 12 to 16, wherein a first time point of the M-AP is determined by the M-AP based on the start time point at which the M-AP sends the beacon frames and the A-BFT start time point, and the first time is a start time at which the M-AP and a plurality of STAs perform beam training in a same time period.

18. The method according to claim 17, wherein the first time point is determined by the M-AP according to a formula:

$$Duration_X^b = \left( A - BFT\ Start\ Time \right) - \left( BTI\ Start\ Time \right)_X - \sum_0^{b-s} \left( TXTIME_{DMG\ Beacon} + SBIFS \right) - \sum_0^s \left( TXTIME_{DMG\ Beacon} + LBIFS \right),$$

wherein *TXTIME* is a time period required for the M-AP to send the beacon frames, *X* is an antenna number of the M-AP in a current BI, *n* represents an $n^{th}$ beacon interval BI, *SBIFS* is a short beamforming interframe space, *LBIFS* is a long beamforming interframe space, *b* is a $b^{th}$ beacon frame, and *S* is a number of antenna switching times in a transmission process of the M-AP.

19. The method according to any one of claims 12 to 18, wherein the first frame further comprises a uniform antenna number allocation element, and the method further comprises:
sending, by the control AP, the antenna mapping relationship and the number of beacon frames to the M-AP in a unicast or broadcast manner by using the uniform antenna number allocation element.

20. The method according to claim 19, wherein before the sending, by the control AP, the antenna mapping relationship and the number of beacon frames to the M-AP in a unicast or broadcast manner by using the uniform antenna number allocation element, the method further comprises:
negotiating, by the control AP, with the M-AP by using a uniform antenna number negotiation element to perform uniform antenna numbering.

21. A beam training apparatus, configured to perform the method according to any one of claims 1 to 11.

22. A beam training apparatus, configured to perform the method according to any one of claims 12 to 20.

23. A beam training apparatus, comprising:

    a transceiver, configured to perform sending and receiving steps; and
    a processor, configured to read and run instructions, to enable the apparatus to implement the method according to any one of claims 1 to 20.

24. The apparatus according to claim 23, wherein the apparatus further comprises a memory, the memory is coupled to the processor, and the memory is configured to store the instructions.

25. A computer-readable medium, configured to store a computer program, wherein the computer program comprises instructions used to implement the method according to any one of claims 1 to 20.

26. A computer program product, wherein the computer program product comprises computer program instructions; and when the computer program instructions are run on a computer, the computer is enabled to perform the method according to any one of claims 1 to 20.

EP 3 965 311 A1

Beacon interval

| BHI<br>Beacon header indication | | | DTI<br>Data transmission interval | | | |
| --- | --- | --- | --- | --- | --- | --- |
| BTI<br>Beacon<br>transmission<br>interval | A-BFT<br>Association<br>beamforming<br>training | ATI<br>Announcement<br>transmission<br>interval | CBAP 1<br>Contention-<br>based access<br>period | SP 1<br>Service period | SP 2 | CBAP 2 |

FIG. 1

FIG. 2

<u>300</u>

| Control AP | | M-AP |

S320: Generate a first frame

S330: First frame →

S310: Generate a plurality of beacon frames

S340: Send the plurality of beacon frames

FIG. 3

| Element ID | Length | Element ID extension | Allocation information | Allocation 1 | Allocation 2 | ... | Allocation N |
|---|---|---|---|---|---|---|---|

Octets:　1　　1　　1　　2　　7　　7　　7

| Number of antennas | Maximum number of transmit antennas | Total number of CDOWN | Average CDOWN |
|---|---|---|---|

Bits:　5　　3　　7　　1

| Receiver address | Uniform antenna |
|---|---|

Octets:　6　　1

| Uniform antenna number identifier | Original antenna number identifier | CDOWN index |
|---|---|---|

Bits:　2　　4　　2

FIG. 4

| Element ID | Length | Element ID extension | Cluster max member | BPAC antenna information |
|---|---|---|---|---|

Octets:     1          1           1                    1                    1

| BPAC member role | Uniform number request | Reserved |
|---|---|---|

Bits:               2                    1                    5

FIG. 5

FIG. 6

Apparatus 700

Processing unit 710

Transceiver unit 720

FIG. 7

| INTERNATIONAL SEARCH REPORT | | International application No. |
|---|---|---|
| | | **PCT/CN2020/093856** |

**A. CLASSIFICATION OF SUBJECT MATTER**

H04B 7/06(2006.01)i;  H04B 7/08(2006.01)i;  H04W 16/28(2009.01)i;  H04W 72/04(2009.01)i

According to International Patent Classification (IPC) or to both national classification and IPC

**B. FIELDS SEARCHED**

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

VEN; WOTXT; USTXT; EPTXT; CNABS; CNTXT; CNKI; IEEE; IEICE: 波束训练, 波束 2w 训练, 信标, 站点, 接入点, 发起, 应答, 信标间隔, 成员AP, 控制AP, 协调AP, STA, AP, C-AP, M-AP, member AP, coordination AP, beacon interval, BI, BTI, A-BFT, initiator, responder, beam training, beamforming training

**C. DOCUMENTS CONSIDERED TO BE RELEVANT**

| Category* | Citation of document, with indication, where appropriate, of the relevant passages | Relevant to claim No. |
|---|---|---|
| A | Kei SAKAGUCHI et al. "Millimeter-Wave Wireless LAN and Its Extension toward 5G Heterogeneous Networks"<br>*IEICE Transactions on Communications*, 01 October 2015 (2015-10-01),<br>    sections 1 and 2 | 1-26 |
| A | Ehab Mahmoud Mohamed et al. "WiFi Assisted Multi-WiGig AP Coordination for Future Multi-Gbps WLANs"<br>*2015 IEEE 26th International Symposium on Personal, Indoor, and Mobile Radio Communications (PIMRC)*, 03 December 2015 (2015-12-03),<br>    entire document | 1-26 |
| A | Pei Zhou et al. "IEEE 802.11ay-Based mmWave WLANs: Design Challenges and Solutions"<br>*IEEE Communications Surveys & Tutorials*, 19 March 2018 (2018-03-19),<br>    entire document | 1-26 |
| A | Pei Zhou et al. "Enhanced Random Access and Beam Training for Millimeter Wave Wireless Local Networks with High User Density"<br>*IEEE Transactions on Wireless Communications*, 22 September 2017 (2017-09-22),<br>    entire document | 1-26 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 July 2020** | **20 August 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/093856**

| C. | DOCUMENTS CONSIDERED TO BE RELEVANT | |
|---|---|---|
| Category* | Citation of document, with indication, where appropriate, of the relevant passages | Relevant to claim No. |
| A | WO 2018203603 A1 (LG ELECTRONICS INC.) 08 November 2018 (2018-11-08) entire document | 1-26 |

Form PCT/ISA/210 (second sheet) (January 2015)

**INTERNATIONAL SEARCH REPORT**
Information on patent family members

International application No.

**PCT/CN2020/093856**

| Patent document cited in search report | | | Publication date (day/month/year) | Patent family member(s) | | | Publication date (day/month/year) |
|---|---|---|---|---|---|---|---|
| WO | 2018203603 | A1 | 08 November 2018 | KR | 20190018521 | A | 22 February 2019 |
| | | | | US | 10631288 | B2 | 21 April 2020 |
| | | | | EP | 3567894 | A1 | 13 November 2019 |
| | | | | KR | 102090287 | B1 | 15 May 2020 |
| | | | | CN | 110679171 | A | 10 January 2020 |
| | | | | EP | 3567894 | A4 | 22 January 2020 |
| | | | | US | 2019182815 | A1 | 13 June 2019 |
| | | | | VN | 68386 | A | 30 January 2020 |
| | | | | IN | 201937045606 | A | 10 January 2020 |

Form PCT/ISA/210 (patent family annex) (January 2015)

**EP 3 965 311 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910504826